# EUROPEAN PATENT APPLICATION

(11) **EP 1 502 766 A2**
(43) Date of publication of application: **02.02.2005**
(21) Application number: 04254363.7
(22) Date of filing: 21.07.2004
(51) Int. Cl.: B42D 15/00, G06K 3/02, G06K 19/06

(54) **Systems and methods of associating printing information with print media**

(30) Priority: 28.07.2003 US 629063
(71) Applicant: Hewlett-Packard Development Company, L.P., Houston, TX 77070 (US)
(72) Inventor: Kabalnov, Alexey S., Corvallis, OR 97330 (US); Deardurff, Larrie A., Corvallis, OR 97330 (US)
(74) Representative: Jackson, Richard Eric

(57) **Abstract**

A print medium (12) is provided having a data storage device (14) attached thereto, the print medium being configured to receive a printed image, and the storage device being configured to receive and store printing information.

## Description

### FIELD OF THE INVENTION

The present invention relates generally to associating printing information with print media. More particularly, printing information can be associated with print media that is related to properties of the print media and/or properties of an image applied to the print media.

### BACKGROUND OF THE INVENTION

Many conventional printing operations utilize print media with varying printing characteristics. For example, common print media used in connection with ink-jet printers include: standard office paper for general print jobs; photographic-quality print media for printing digital photographs; and colored or decorated media for printing greeting cards, brochures, invitations, etc. Due to the various types of print media, and the various type of ink being applied to the print media, printers often use varied settings when printing to ensure the best image is produced on the print media. That is, the printer setting can be varied in order to optimize the printing process for the particular print medium being used.

As an example, photo-quality print media may absorb more or less ink than more conventional papers, depending on the characteristics of the photo print media. Many printers have been configured to account for this fact and include interface software to enable the user to indicate to the printer which print media is being utilized. While this provides a user with the option of tailoring the printing process to the print media being used, the user must typically ensure that the printer is provided with the proper identification of the print media being used. This can be further complicated when a variety of print media are being used, as such information must provided to the printer with each print job sent in order to achieve the best results.

Some printers have been developed that include optical sensors which detect light reflection properties of print media in an effort to determine the type of print media being utilized. Print media detectors have also been used which detect a level of elasticity present in print media in an effort to determine the weight and other properties of the print media. However, these methods have proved problematic in that the detection system being used must rely on detectable qualities of the print media, which can lead to errors in proper detection of print media, particularly since there are many different types of print media from many different companies. Also, print media may vary in characteristics other than those detectable by such methods, such as fiber composition and length, etc.

In addition to these problems associated with variable print media, digital images have for some time been printed on or applied to print media. For example, many consumers own digital cameras and make a practice of storing the images captured by the digital camera in digital files on a home computer. Other consumers scan traditional photos into digital files and store the digital files on a home computer. Once stored on the computer as a digital file, consumers can print hard copies of those images as described. While this process enables the consumer to obtain a printed hard copy of the image desired, the resulting hard copy suffers from problems long associated with traditional photography. For example, only the image is transferred to the print media and the print media generally contains no extraneous information relating to the image.

Consequently, if the consumer wishes to re-print the image in the future, the consumer must locate the particular digital file containing the image (much like the case in traditional photography, wherein a consumer would have to locate the negative from which an image was developed onto photographic paper). Because a user may have many digital image files stored on the computer, it may be difficult to locate the original digital image file. In addition, in the case where a user prints an image located on a distant server, for instance on the internet, a user may not remember which site contained the image file if he or she wishes to view the image file again. Further, users who print hard copies of digital images often edit the image or apply special filters, red-eye tools, etc., prior to printing the image. A user may be particularly pleased with the resulting hard copy of the image, but when attempting to recreate the same effect may have difficulty remembering which filters were applied or which editing techniques were used prior to transferring the image onto the print medium.

### SUMMARY OF THE INVENTION

It has been recognized that it would be advantageous to provide a method and device that can be used to accurately identify print information related to a print medium and/or an image applied to the print medium. Specifically, it has been recognized that it would be advantageous to provide a print medium having a data storage device attached thereto to receive and store printing information. The print medium can be configured to receive a printed image, and the data storage device can be configured to receive and store printing information.

In accordance with another aspect of the invention, a printing system can include a print medium configured to receive a printed image, and a data storage device attached to the print medium. The data storage device can be configured to receive and store printing information. A printer is also provide and can be configured to print the image on the print medium. A printing information processor can be associated with the printer and can be configured to read data from and write data to the data storage device.

In accordance with another aspect of the invention, a method for associating printing information with a print medium is provided, and includes the steps of attaching a data storage device to the print medium, and storing printing information on the data storage device.

Additional features and advantages of the invention will be apparent from the detailed description which follows, taken in conjunction with the accompanying drawings, which together illustrate, by way of example, features of the invention.

### BRIEF DESCRIPTION OF THE DRAWINGS

FIG. 1 is a perspective view of a print medium having a data storage device attached thereto in accordance with an embodiment of the present invention;
FIG. 2 is a side, schematic cutaway view of a printer in accordance with one aspect of an embodiment of the invention;
FIG. 3A is a section of a side, cross-sectional cutaway view of a print medium in accordance with one aspect of an embodiment of the invention;
FIG. 3B is a section of a side, cross-sectional cutaway view of a print medium in accordance with another aspect of an embodiment of the invention; and
FIG. 3C is a section of a side, cross-sectional cutaway view of a print medium in accordance with yet another aspect of an embodiment of the invention.

### DETAILED DESCRIPTION OF THE PREFERRED EMBODIMENT(S)

Before particular embodiments of the present invention are disclosed and described, it is to be understood that this invention is not limited to the particular process and materials disclosed herein as such may vary to some degree. It is also to be understood that the terminology used herein is used for the purpose of describing particular embodiments only and is not intended to be limiting, as the scope of the present invention will be defined only by the appended claims and equivalents thereof.

In describing and claiming the present invention, the following terminology will be used.

The singular forms "a," "an," and "the" include plural referents unless the context clearly dictates otherwise.

As used herein, the term "print media" or "print medium" is understood to refer to a material which is specifically configured to be used in a printer to receive an image applied by the printer. Print media can include, without limitation, standard office paper, photo-quality print paper, swellable print paper, specialty print paper, such as decorative paper for greeting cards, etc. As used herein, "print media" does not include devices intended for purposes other than receiving and displaying images, such as credit cards, identification badges, etc.

Similarly, as used herein, the term "image" is meant to include a variety of patterns or printed information applied to a print medium. Image is meant to include not only pictures or graphics, but textual information as well.

The term "printing information" includes any data information that can be stored on a data storage device in accordance with embodiments of the present invention. Though not required, the printing information can be related to properties of the print media itself, and/or properties of an image applied to the print media.

"Data storage device" refers to devices that are machine readable and/or writable that can store data information, such as digitally, electromagnetically, optically, or the like. A printed image, such as a bar code printed on a substrate, would not be considered a data storage device in accordance with embodiments of the present invention.

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the invention as illustrated herein, which would occur to one skilled in the relevant art and having possession of this disclosure, are to be considered within the scope of the invention.

As illustrated in FIG: 1, a system in accordance with the present invention is shown including a print medium 12 having a data storage device 14 attached thereto. The print medium can be configured to receive an image printed thereon by a printer. The print medium can be of a wide variety of media known to those in the art, including conventional printing or copying paper, photo-quality printer paper, specialty papers, etc. The data storage device attached to the print medium can be configured to store a variety of information relating to the printing process. For example, the data storage device can store data relating to properties of the print medium. In addition, the data storage device can store data relating to the image printed on or applied to the print medium.

By advantageously providing a data storage device 14 attached to a print medium 12, the present invention can be utilized to maintain print information integrally with the print medium. When used with a printer having a printing information data processor, as discussed in further detail below, the printer can read information stored on the data storage device to automatically detect properties of the print medium, obviating the need for a user to indicate to the printer which print medium is being used. In addition, by storing information relating to an image applied to the print medium, the image information can be maintained integrally with the printed image to enable a user to access the image information at a later date.

The type of information storable upon the data storage device 14 can be of a variety that would be known to those in the art after considering the present disclosure. For example, information or data relating to the print medium 12 can be stored on the storage device. Such print media data can include, without limitation, size and weight of the print medium, quality or finish of the print medium, or ink capacity of the print medium. Also, data such as which default printing mode should be associated with the print medium, i.e., best quality or draft quality, can be stored on the data device, as well as information relating to a preferred color map to be used with the print medium.

In addition to information relating to the properties of the print medium 12, operational data files usable by the printer can be stored on the data storage device 14. For example, a file containing computer code defining a color map can be stored on the data storage device. In addition, printer drivers optimized for the print medium can be stored on the storage device and used by the computer and printer. This can be advantageous in that manufacturers of print media can include updated printer drives for particular printers to optimize the printing process on newly developed print media.

In one aspect of the invention, information relating to an image applied, or to be applied, to the print medium 12 can be stored on the data storage device 14. Information relating to the image can include, without limitation, "pointer" information, that is, information that "points" to a location of a file in which the image is contained. Pointer information can include file location, web site location where the image can be found, drive location, etc.

The information related to the image can also include date and time information relating to creation of the image, a preferred print mode associated with the image, e.g., "high quality" or "draft," location of a photo gallery with which the image is associated, and information relating to identification of people or objects contained in the image, such as names of people or objects, location of objects, including Global Position System data relating to objects, etc. In the event the image comprises a text document, information related to the image may include font types, authorship information, creation date, file location, associated word processing program, the electronic file itself, etc.

Information relating to the image printed on the print medium 12 can also include preferred printer settings, revision data format, equipment used to create the image, copyright ownership information, description of the image, proof of authenticity, etc. In addition to this type of identification data, information related to the image on the print medium can also comprise data files, including the original image data file, audio clips that relate to the image, or video clips that relate to the image. The video clip can contain, for example, a video file, one or more frames of which are captured in the image printed on or applied to the print medium.

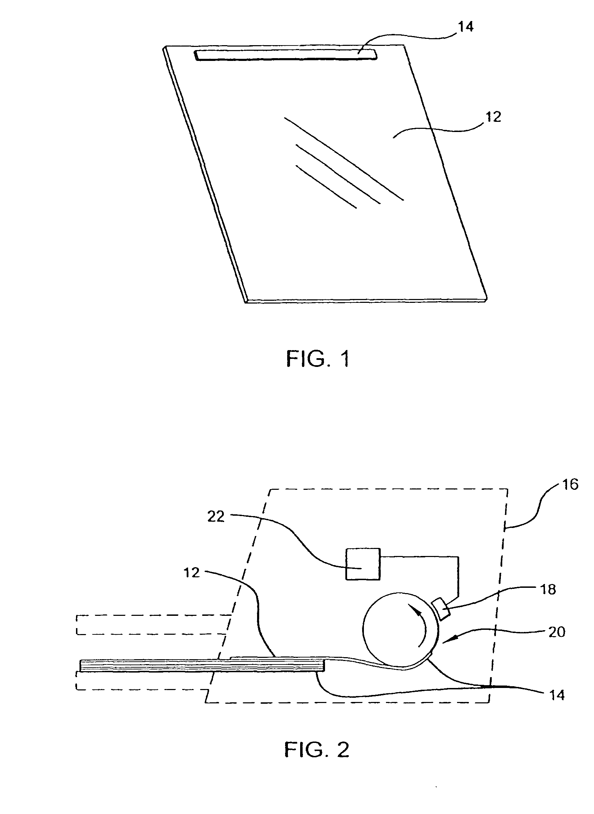

Turning to FIG. 2, a print medium 12 and a data storage device 14 attached to the print medium is shown. The print medium and data storage device can be provided in accordance with the embodiments discussed in further detail herein. In addition, a printer 16 can be included and configured to print an image (not shown) on the print medium. A printing information processor 18 can be associated with the printer and can be configured to read data from and write data to the data storage device.

As shown in FIG. 2, the printer 16 can receive the print media 12 (such as in a stacking tray) and can direct the data storage device 14 attached to a single print medium past the print information processor 18. In one embodiment, the print information processor can read printing information data from the data storage device and provide the printing information to control circuitry of the printer to optimize the printing process. In this aspect, information relating to the print medium can be used by the printer to define various printing parameters, such as printing speed, size, and weight of the print medium, etc. The information relating to the print medium can, for example, be stored on the data storage device at the time of manufacture of the print medium. Thus, print medium manufacturers can ensure that users of their products are obtaining optimal printing results regardless of the level of expertise of the user, provided the printer is equipped with an information processor.

In another aspect of the invention, the information processor 18 can write printing information data to the data storage device 14. In this aspect, information relating to the image to be applied to the print medium 12 can be stored on the data storage device at the time the image is applied to the print medium. Thus, file location and identification information, or file data, etc., can be included on the data storage medium and will remain with the image for later use. In the case where the image data file is stored on the print medium, a user can feed the print medium containing the printed image through the printer, and the printing information processor can read and extract the image data file. The image data file can then be saved to the computer associated with the printer, or used for some other purpose. In this manner, should a user have problems locating the original image data file, the image data file can be retrieved from the data storage device and restored to a computer for further use.

In the embodiment illustrated in FIG. 2, the data storage device 14 is located near a leading edge 20 of the print medium 12 and is first read or written to by the printing information processor 18. After passing the printing information processor, a print head 22 can print or apply an image (not shown) to the print medium. The invention is not limited, however, to attaching the data storage device to the leading edge of the print medium. The data storage device can be attached to a variety of suitable locations on the print medium, and can assume a variety of sizes and types.

The printer 16 can be of a variety of types as well, as known to those skilled in the art. For example, the printer can be a laser printer, which applies the image to the print medium by applying toner to the print medium 12. In another aspect, the printer can include an ink-jet printer, which applies ink to the print medium. Other known printing systems can be incorporated into the system as well, including thermal transfer printers, dye sublimation, etc.

In one embodiment, the print information processor 18 and print head 22 can be included in an integral unit (not shown). In this aspect, the print medium can be fed past the integral unit for reading or writing to the data storage device, return-fed back past the integral unit, and again fed past the integral unit for application of the image to the print medium. Such an embodiment would allow for the retrofitting of printers currently on the market with print information processors, as print cartridges are typically replaceable in most printers. In other words, a print information processor/ink-jet print cartridge can be made to be integral, and can be controlled by a print cartridge bay (not shown), with or without modification to the circuitry of the printer. In accordance with further embodiments of the invention, the data storage device 14 can be located in a variety of operational locations on the print medium, and the location of the printer information processor can be adjusted within the printer accordingly.

The printing information processor 18 can be configured to write printing information to the data storage device 14 in a number of manners. For example, each time a print job is sent to the printer, a software interface can prompt the user sending the print job if the user would like to write particular print information to the data storage device. The user can then instruct the information processor to write data or information to the data storage device accordingly. For instance, the user may choose to write to the data storage device information relating to the content of the image, or names of individuals shown in the image, or objects depicted in the image, etc. Alternatively, the print information processor can be configured to automatically write a predefined set of information to the data storage device, such as the data file containing the image, or the identity and/or location of the data file containing the image.

In addition, while the data storage device 14 is shown in the figures as a generally elongate strip of material, the data storage device can be of a number of sizes and configurations. For instance, in order to increase the storage capacity of the data storage device, the storage device can be of larger size, and in one embodiment (not shown) is of substantially the same size as the underlying print medium 12. In those embodiments wherein the data storage device is substantially invisible to the human eye, as discussed in more detail below, the data storage device can be placed in areas of the print medium where the image will be applied to the print medium, without interfering with or detracting from the image applied to the print medium.

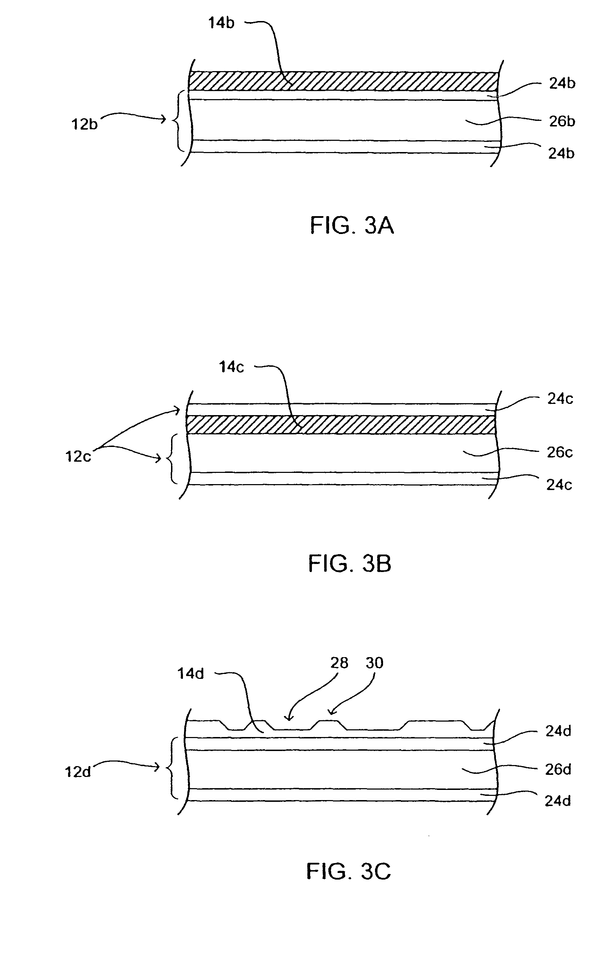

FIGS. 3A through 3C illustrate data storage medium configurations in accordance with further aspects of the invention. It is often the case that a print medium is formed of multiple layers, including paper having multiple layers or levels of fibers. Also, a print medium often includes coatings applied to an underlying paper substrate to enhance or improve the printing characteristics of the print medium. For instance, a print medium for use with ink-jet printers often includes a coating layer to enhance the image quality, lightfastness, waterfastness, and/or other known printing properties. Suitable coatings can include polymeric swellable media coatings, porous media coatings, and clay coatings, as are known in the art. The coatings can by applied to substantially all of the print media, or only in localized areas. For instance, coatings may be applied only to a localized area to coat or protect an attached data storage device without requiring that the entire print medium be coated.

As shown in FIG. 3A, in one aspect of the invention, print medium 12b can include outer layers 24b. The outer layers can be a coating applied to the underlying paper or medium 26b, or can be an outer layer of fibers comprising the paper or print medium. In this embodiment, data storage device 14b is attached to on outer surface of the print medium. Optionally, the data storage device can be visible to the human eye, as in the case where a darkly colored magnetic strip is used as the data storage device. In other embodiments, the data storage device may not be clearly visible to the human eye, even when applied to an outer surface of the print medium. For instance, in one embodiment, the data storage device can be a magnetic strip that appears as substantially the same color as the print medium such that it is substantially undetectable by the human eye.

Magnetic strip data storage devices are known to those skilled in the art of data storage, and, in accordance with the present invention, can be made readable, writable, and rewritable. The strips (or stripes) are generally comprised of a large number of small ferromagnetic particles or pigments (not shown) that are magnetized in a particular polarization. By magnetizing each pigment to a particular polarization, data can be stored on the magnetic strip and can later be read by a magnetic strip reader. Magnetic strips have been used extensively on devices such as credit cards and identification cards.

As shown in FIG. 3B, in one aspect of the invention the data storage device 14c can be attached to the print medium 12c by embedding the data storage device within print medium. Outer surfaces 24c can be outer fibers of the print medium, under which the data storage device can be imbedded on underlying paper or medium 26c. Outer surfaces can also be a coating applied to the print medium to enhance the printing properties of the print medium. By imbedding the data storage device within the print medium, the data storage device can be hidden from the human eye and will not interfere with or detract from the image applied to the print medium.

As shown in FIG. 3C, in one embodiment of the invention, a print medium 12d supports a data storage device 14d, which comprises an optical data storage device. Optical data storage devices have been used on devices such as Compact Disks, Digital Video Disks, etc. In general, optical data storage devices include peaks 30 and valleys 28 which are recorded on the storage device to represent particular data. In one application, a laser beam is projected onto the storage device and is reflected to and read by an optical reader, indicating which locations on the storage device include peaks and which include valleys. Thus, printing information can be stored on the optical data storage device and can be read with an optical printing information processor (18 in FIG. 2). Also, the printing information processor can write data to the data storage device using dyes and the like, as is known in the art of writable and rewritable optical data storage.

While optical data device 14d is shown in FIG. 3C as attached to an outer surface 24d of the print medium 12d, in other embodiments the optical data device can be imbedded within the print medium between outer surface 24d and underlying paper or medium 26d. The optical data storage device may be laminated with a clear coating that enables the optical processor to read and write to the optical data storage device.

In addition to magnetic strips and optical data storage devices, the data storage device of the present invention can be of a wide variety of those known in the art of data storage. Other examples include printed code, Radio Frequency ("RF") tags, Radio Frequency Identification ("RFID") memory spots, flash memory, etc. Similarly, the information data processor (18 in FIG. 2) can be of any type to correspond to the particular data storage device attached to a particular print media.

In the case where the data storage device is both readable and writable, as discussed in further detail above, the data storage device can be used to provide a record of edits or changes to an image, or of identities of users who have read or edited the image. For example, an image in the form of a draft text document may be distributed to a variety of readers, each of whom may make edits or add suggestions to the text. The data storage device can be used to track the users who have read or viewed the image, and track respective edits or comments made or suggested by each user.

In accordance with one embodiment of the invention, the data storage device can be read or written to by an auxiliary read/write device. For instance, a hand-held data reader can be used to record printing information stored on the data storage device in applications remote from the printing process. In this embodiment, the auxiliary device can still be considered to be associated with the printer. This can be advantageous, for example, in those instances where a user may wish to simply read from the data storage device the identities of users who have read or edited an image stored on a print medium. In this case, the user need not have access to a printer, but can simply read the desired information with a data reader.

In accordance with yet another aspect of the invention, a method for associating printing information with a print medium is provided and includes the steps of attaching a data storage device to a print medium, and storing printing information on the data storage device. The step of attaching the data storage device to the print medium can include the further step of adhering the data storage device to an outer surface of the print medium, and embedding the data storage device within the print medium.

In one aspect, the step of storing printing information on the data storage device can include the further step of storing information relating to properties of the print medium on the data storage device. The step of storing printing information on the data storage device can also include the further step of storing information relating to printed material applied to the print medium on the data storage device.

It is to be understood that the above-referenced arrangements are illustrative of the application for the principles of the present invention. Numerous modifications and alternative arrangements can be devised without departing from the spirit and scope of the present invention while the present invention has been shown in the drawings and described above in connection with the exemplary embodiments(s) of the invention. It will be apparent to those of ordinary skill in the art that numerous modifications can be made without departing from the principles and concepts of the invention as set forth in the claims.

## Claims

1. A print medium having a data storage device attached thereto, said print medium being configured to receive a printed image, and said data storage device being configured to receive and store printing information.

2. The print medium of claim 1, wherein the data storage device is adhered to an outer surface of the print medium.

3. The print medium of claim 1, wherein the data storage device is embedded within the print medium.

4. The print medium of claim 1, wherein the data storage device comprises a magnetic strip.

5. The print medium of claim 1, wherein the data storage device comprises an optical data storage device.

6. The print medium of claim 1, wherein the printing information comprises data related to properties of the print medium.

7. The print medium of claim 1, wherein the printed image has been applied to the print medium, and the printing information comprises data related to the printed image.

8. A printing system, comprising:
a print medium configured to receive a printed image;
a data storage device attached to the print medium, said data storage device being configured to receive and store printing information;
a printer configured to print the image on the print medium; and
a printing information processor associated with the printer, said printing information processor being configured to read data from or write data to the data storage device.

9. The system of claim 8, wherein the printing information processor comprises a data read/write processor, capable of both reading data from and writing data to the data storage device.

10. A method for associating printing information with a print medium, comprising steps of:
attaching a data storage device to a print medium; and
storing printing information on the data storage device.
